# EUROPÄISCHE PATENTSCHRIFT

(11) **EP 2 926 020 B1**
(45) Veröffentlichungstag und Bekanntmachung des Hinweises auf die Patenterteilung: **30.05.2018**
(21) Anmeldenummer: 13795159.6
(22) Anmeldetag: 05.11.2013
(51) Int. Cl.: F16D 55/28, F16D 65/18

(54) **BREMSANORDNUNG UND ELEKTROMOTOR**
BRAKE ASSEMBLY AND ELECTRIC MOTOR
DISPOSITIF DE FREINAGE ET MOTEUR ÉLECTRIQUE

(30) Priorität: 27.11.2012 DE 102012023096; 27.03.2013 DE 102013005239
(43) Veröffentlichungstag der Anmeldung: 07.10.2015
(73) Patentinhaber: Sew-Eurodrive GmbH & Co. KG, 76646 Bruchsal (DE)
(72) Erfinder: FLÖRCHINGER, Gerhard, 67376 Harthausen (DE); FICHTNER-PFLAUM, Gerolf, 76703 Kraichtal-Unteröwisheim (DE)
(86) Internationale Anmeldenummer: PCT/EP2013/003317
(87) Internationale Veröffentlichungsnummer: WO 2014/082708

(56) Entgegenhaltungen:
- DE-A1- 10 143 499
- DE-A1- 19 646 493
- DE-A1-102009 039 108
- US-A1- 2008 156 590

## Beschreibung

Die Erfindung betrifft einen Bremsanordnung und einen Elektromotor.

Es ist allgemein bekannt, dass elektromagnetisch betätigbare Bremsen einen störenden Geräuschpegel der Bremse erreichen, insbesondere beim Lüften der Bremse, also Bestromen der Spulenwicklung und somit des Elektromagneten der Bremse,
**Aus der** DE 101 43 499 A1 **ist eine Geräuschdämpfung von elektromagnetischen Bremsen über Dämpfungsglieder unterschiedlicher Federsteifigkeit bekannt.**

**Aus der** US 2008/156590 A1 **ist eine Dämpfung einer Aufzugsbremse bekannt.**

**Aus der** DE 196 46 493 A1 **ist eine Einrichtung zur Geräuschdämpfung bei mechanischen Bremsen bekannt.**

**Aus der** DE 10 2009 039108 A1 **ist eine Vorrichtung zum Einstellen einer Normalkraft eines elastischen Dämpfungselements auf einer Gleitoberfläche bekannt.**

Der Erfindung liegt daher die Aufgabe zugrunde, der Geräuschpegel bei einer elektromagnetische betätigbaren Bremse zu verringern.

Erfindungsgemäß wird die Aufgabe bei der Bremsanordnung nach den in Anspruch 1 und bei dem Elektromotor nach den in Anspruch 15 angegebenen Merkmalen gelöst.

Wichtige Merkmale der Erfindung bei der Bremsanordnung mit einem eine Spulenwicklung, insbesondere Ringwicklung, aufnehmenden Spulenkern, insbesondere Magnetkörper, und mit einer mit dem Spulenkern drehfest aber verschiebbar, insbesondere axial verschiebbar, insbesondere also in Achsrichtung einer abzubremsenden Welle, angeordneten Ankerscheibe,
**wobei in einer Ausnehmung der Ankerscheibe und/oder in einer Ausnehmung des Magnetkörpers eine Doppelhülse angeordnet und gehalten ist, deren axiale Ausdehnung größer ist als die axiale Ausdehnung des Luftspaltes zwischen Ankerscheibe und Magnetkörper,**
**insbesondere wobei die Doppelhülse aus einem einen Innenkonus aufweisenden Ringteil, also Hülsenteil, und einem einen Außenkonus aufweisenden Ringteil, also Stempelteil, zusammengesetzt ist,**
**wobei das Stempelteil mit einem Teilbereich seines Außenkonus an einem Teilbereich des Innenkonus des Hülsenteils anliegt,**
**wobei das Hülsenteil in axialer Richtung, insbesondere also Verschiebungsrichtung, weniger vom Magnetkörper beabstandet ist als das Stempelteil,**
- **wobei die Doppelhülse axial begrenzt ist durch den Boden der Ausnehmung in der Ankerscheibe und/oder im Magnetkörper**
- **oder wobei die Doppelhülse axial begrenzt ist durch eine mittels einer Stellschraube axial verstellbare Druckscheibe, insbesondere wobei die Stellschraube schraubverbunden ist mit der Ankerscheibe oder dem Magnetkörper und/oder wobei die Stellschraube mittels einer Kontermutter an der Ankerscheibe und/oder am Magnetkörper festlegbar ist.**

**Von Vorteil ist dabei, dass das Hülsenteil und das Stempelteil vor dem Aufschlagen der Ankerscheibe auf den Magnetkörper elastisch verformt werden und dabei eine auf die Ankerscheibe wirkende Rückstellkraft erzeugen, die den Aufschlag abdämpft.**

**Dabei ist die jeweilige Ausnehmung entweder als Sackloch ausgeführt, so dass die Doppelhülse vom Boden des Sacklochs axial begrenzt ist oder alternativ ist die Ausnehmung als Stufenbohrung ausgeführt, so dass eine Stellschraube von der äußeren Oberfläche des Magnetkörpers beziehungsweise der Ankerscheibe zur Doppelhülse hineinragt und direkt oder mittels einer zwischengeordneten Scheibe, insbesondere Druckschreibe, die Doppelhülse axial begrenzt, wobei mittels der Stellschraube die axiale Begrenzung einstellbar ist.**

**Stempelteil und Hülsenteil könnten auch mit Axialschlitz ausgeführt werden zur Erzielung einer verbesserten elastischen Verformbarkeit.**

Wichtige Merkmale der Erfindung bei der Bremsanordnung mit einem eine Spulenwicklung, insbesondere Ringwicklung, aufnehmenden Spulenkern, insbesondere Magnetkörper, und mit einer mit dem Spulenkern drehfest aber verschiebbar, insbesondere axial verschiebbar, insbesondere also in Achsrichtung einer abzubremsenden Welle, angeordneten Ankerscheibe,
wobei mit der Ankerscheibe zumindest ein Stempelteil verbunden ist,
wobei das jeweilige Stempelteil mit einem das jeweilige Stempelteil zumindest teilweise aufnehmendes Hülsenteil zusammenwirkt,
wobei das Hülsenteil mit dem Spulenkern verbunden ist, insbesondere kraftschlüssig verbunden ist,
insbesondere wobei das Hülsenteil in einer Ausnehmung des Spulenkerns gehalten ist mittels zumindest eines elastischen Elements.

Von Vorteil ist dabei, dass mittels des Aufdehnens des Hülsenteils die Ankerscheibe abbremsbar ist und somit das Aufschlaggeräusch verringerbar ist. Somit ist als federnder Teil eines Dämpfungssystems eine Dehnhülse verwendbar.

Bei einer vorteilhaften Ausgestaltung ist der Spulenkern aus einem ferromagnetischen Material, insbesondere Stahlguss, insbesondere GGG-Grauguss, gefertigt. Von Vorteil ist dabei, dass eine kostengünstige Herstellung des Spulenkerns ermöglicht ist.

Bei einer vorteilhaften Ausgestaltung sind Ankerscheibe, Hülsenteil und/oder Stempelteil aus einem Stahl gefertigt, insbesondere aus einem ferromagnetischen Stahl. Von Vorteil ist dabei, dass hochstabile Teile für eine hohe Standzeit verwendbar sind.

Bei einer vorteilhaften Ausgestaltung weist das Stempelteil einen außenkonischen Abschnitt auf und das Hülsenteil einen innenkonischen Abschnitt, wobei die Konuswinkel des außenkonischen und innenkonischen Abschnitts sich um einen nicht verschwindenden Winkelbetrag unterscheiden, insbesondere wobei der Winkelbetrag zwischen 2° und 20° beträgt. Von Vorteil ist dabei, dass ein massives Stempelteil in einen dünnwandigen außenkonischen Abschnitt des Hülsenteils einführbar ist und diesen ausdehnbar macht, weil der Konuswinkelbetrag des außenkonischen Abschnitts größer ist als der Konuswinkelbetrag des innenkonischen Abschnitts. Das Stempelteil ist sozusagen stumpfwinkliger und dehnt somit den spitzeren Innenkonus auf. Dabei bleibt die Verformung jedoch im elastischen Bereich des Materials.

Bei einer alternativen vorteilhaften Ausgestaltung weist das Stempelteil einen innenkonischen Abschnitt aufweist und das Hülsenteil einen außenkonischen Abschnitt, wobei die Konuswinkel des außenkonischen und innenkonischen Abschnitts sich um einen nicht verschwindenden Winkelbetrag unterscheiden, insbesondere wobei der Winkelbetrag zwischen 2° und 20° beträgt. Von Vorteil ist dabei, dass die Hülse, also Dehnhülse, mit einem außenkonischen Abschnitt dünnwandig gestaltbar ist.

Bei einer vorteilhaften Ausgestaltung ist die Stempelteile an der Ankerscheibe einstückig ausgeformt. Von Vorteil ist dabei, dass kein Einfügen der Stempelteile notwendig ist.

Bei einer alternativen vorteilhaften Ausgestaltung ist jedes Stempelteil mittels einer Stellschraube, insbesondere mit Kontermutter, schraubverbunden mit der Ankerscheibe. Von Vorteil ist dabei, dass der Abstand zwischen Stempelteil und Spulenkern einstellbar ist, insbesondere bei unbestromter Spulenwicklung. Somit ist auch die Dämpfung entsprechend beeinflussbar.

Bei einer vorteilhaften Ausgestaltung ist das Hülsenteil kraftschlüssig mit dem Spulenkern verbunden. Von Vorteil ist dabei, dass das Hülsenteil nicht direkt mit dem Spulenkern verbunden ist sondern über elastische Elemente, wie O-Ringe oder dergleichen.

Bei einer vorteilhaften Ausgestaltung ist am Hülsenteil ein elastisches Element, wie O-Ring oder dergleichen, angeordnet, das zwischen dem Hülsenteil und dem Spulenkern, insbesondere einer Ausnehmung des Spulenkerns, angeordnet ist,
insbesondere wobei das elastische Element angestellt ist gegen einen Absatz, insbesondere Durchmesserstufe, des Hülsenteils. Von Vorteil ist dabei, dass das elastische Element verbunden, insbesondere auf das Hülsenteil aufgesteckt ist oder als Kunststoffumspritzung hergestellt ist. Das Hülsenteil ist also entweder ein aus einer metallischen Hülse und einem elastischen Stoff zusammengesetztes Teil oder ein Verbundteil, dessen metallische Hülse mit dem elastischen Stoff stoffschlüssig verbunden ist. In axialer Richtung begrenzt der Absatz die Bewegung des elastischen Stoffs. Somit stützt sich das elastische Teil an diesem Absatz ab und wird zwischen Spulenkern und Absatz zusammengequetscht.

Bei einer vorteilhaften Ausgestaltung sind die Stempelteile in Umfangsrichtung voneinander regelmäßig beabstandet. Von Vorteil ist dabei, dass mehrere solcher Dämpfungssysteme, umfassend jeweils ein Stempelteil und ein Hülsenteil, vorsehbar sind und somit die Dämpfung verbesserbar ist.

Bei einer alternativen vorteilhaften Ausgestaltung sind die Hülsenteile in Umfangsrichtung voneinander regelmäßig beabstandet. Von Vorteil ist dabei, dass eine gleichmäßige Aufteilung der Kräfte erreichbar ist.

Bei einer vorteilhaften Ausgestaltung weist das jeweilige Hülsenteil Schlitze auf, insbesondere zur Hülsenachse radial und axial sich erstreckende Schlitze, insbesondere wobei die Schlitze sich zur Hülsenachse radial und axial weiter erstrecken als in Umfangsrichtung. Von Vorteil ist dabei, dass die Elastizität des Hülsenteils entsprechend anpassbar ist. Die Federkennlinie, also der Zusammenhang zwischen Rückstellkraft und Auslenkung der Ankerscheibe beziehungsweise relative Verschiebung des Stempelteils zum Hülsenteil, des mit dem Stempelteil zusammenwirkenden Hülsenteils ist somit weniger steil vorsehbar, also eine größere Elastizität erreichbar.

Bei einer vorteilhaften Ausgestaltung ist am Hülsenteil ein weiteres elastisches Element, wie O-Ring oder dergleichen, angeordnet, welcher wiederum zwischen Spulenkern und Hülsenteil angeordnet ist und elastisch verformt ist, insbesondere so dass das Hülsenteil zentriert ist in der Aufnahme, insbesondere Sackloch, des Spulenkerns. Von Vorteil ist dabei, dass die Zentrierung verbesserbar ist.

Bei einer vorteilhaften Ausgestaltung ist der Durchmesser des innenkonischen Abschnitts größer als die Wandstärke im außenkonischen Abschnitt. Von Vorteil ist dabei, dass der außenkonische Abschnitt dünnwandig gestaltbar ist und somit eine hohe Elastizität des metallischen Teils erreichbar ist.

Bei einer vorteilhaften Ausgestaltung begrenzt der Boden der Ausnehmung, insbesondere der Sacklochbohrung, das Hülsenteil in Hubrichtung der Ankerscheibe. Von Vorteil ist dabei, dass die gesamte Federkennlinie des Dämpfungssystems, also die Abhängigkeit der Rückstellkraft von der relativen Verschiebung des Stempelteils zum Hülsenteil, für kleine Auslenkungen oder relative Verschiebungen von der elastischen Verformung des elastischen Elements wesentlich bestimmt ist und ab einer Auslenkung beziehungsweise relativen Verschiebung, bei welcher das Hülsenteil auf den Boden der Ausnehmung im Spulenkern gedrückt wird, durch die elastische Verformung, insbesondere Aufdehnung, des Hülsenteils. Somit ist die gesamte Kennlinie aus zwei Teilbereichen mit zueinander völlig unterschiedlichen Steigungen zusammensetzbar.

Bei einer vorteilhaften Ausgestaltung steht das elastische Element axial über den axialen Endabschnitt des Hülsenteils hervor,
insbesondere wobei die Verformung des elastischen Elements begrenzt ist durch die Berührung zwischen Hülsenteil und Spulenkern, insbesondere Boden der Ausnehmung, insbesondere des Sacklochs, des Spulenkerns. Von Vorteil ist dabei, dass das elastische Element nicht unzulässig hoch verformbar ist sondern im vorgegebenen Raumvolumen zwischen Hülsenteil, dessen Absatz und dem Spulenkern in dessen Ausnehmung verformbar ist.

Wichtige Merkmale bei dem Elektromotor sind, dass er mit einer vorgenannten Bremsanordnung ausgeführt ist. Insbesondere ist dabei die Bremsanordnung auf der von der vom Motor angetriebenen Last abgewandten axialen Seite der Rotorwelle des Motors angeordnet. Von Vorteil ist dabei, dass eine hohe Dämpfungswirkung erreichbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Querschnitt durch ein erstes erfindungsgemäßes Ausführungsbeispiel einer erfindungsgemäßen Bremsanordnung für einen Motor, insbesondere Elektromotor gezeigt.
In der Figur 2 ist eine zugehörige Draufsicht gezeigt.
In der Figur 3 ist ein zweites erfindungsgemäßes Ausführungsbeispiel mit einem fest eingebauten Stempelteil 7 schematisch skizziert.
IN der Figur 4 ist ein weiteres erfindungsgemäßes Ausführungsbeispiel schematisch skizziert, das dem ersten Ausführungsbeispiel nach Figur 1 und 2 .dem Prinzip nach entspricht.

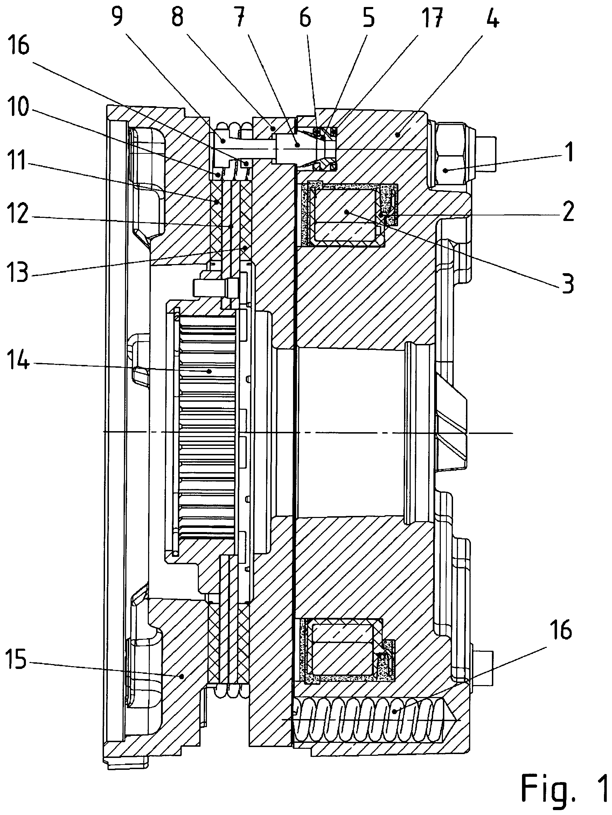

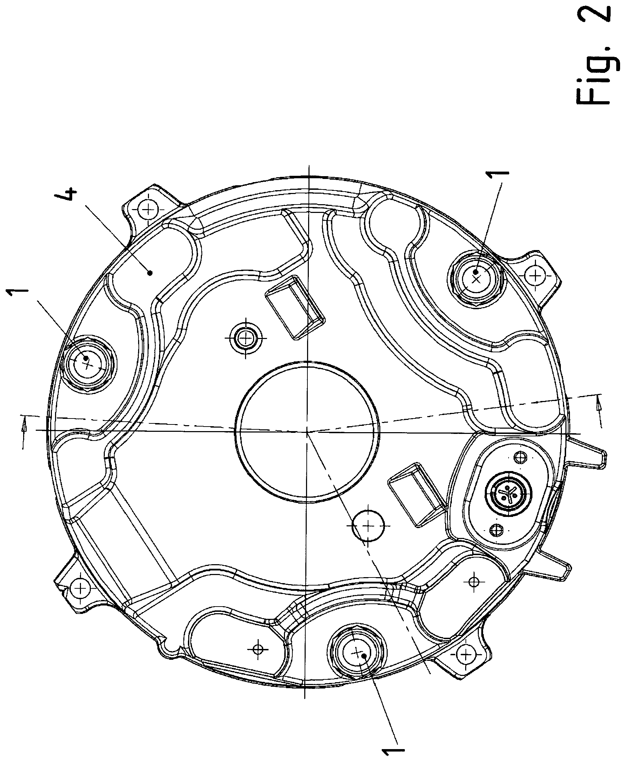

Wie in Figur 1 und 2 gezeigt, ist in einem Magnetkörper 4, insbesondere ein GGG Stahlgussteil, also ferromagnetischen Stahlgussteil, eine ringförmige Ausnehmung als Aufnahmebereich ausgeformt, in welcher eine Ringwicklung 3 aufgenommen ist.

Bei Bestromung der Ringspule wird eine mit dem Magnetkörper 4 drehfest aber zum Magnetkörper hin verschiebbar angeordnete Ankerscheibe 8, welche mittels mit dem Magnetkörper 4 fest verbundener Führungsteilen, insbesondere Bolzen, bei der Bewegung geführt ist, zum Magnetkörper 4 hin gezogen entgegen der Federkraft von Federelementen 10, welche sich am Magnetkörper 4 abstützen.

Die Federelemente sind auf jeweils gleichem Radialabstand zu der Achse der abzubremsenden Welle, insbesondere Rotorwelle eines Elektromotors, angeordnet, wobei sie in Umfangsrichtung zueinander den jeweils selben Abstand aufweisen.

Ein eine Bremsfläche aufweisendes Teil, insbesondere Gehäuseteil oder Lagerflansch zur Aufnahme des Lagers einer Welle, insbesondere Rotorwelle, ist vom Magnetkörper 4 beabstandet und fest mit ihm verbunden. Zur Beabstandung dienen die als Abstandsbolzen ausgeführten Führungsteile.

Ein mit der Welle drehfest aber verschiebbar, insbesondere in Richtung der Wellenachse, verbundener Belagträger12 mit beidseitig, insbesondere in und gegen Wellenachsrichtung, angeordnetem Bremsbelägen (11, 13) ist zwischen Ankerscheibe 8 und Bremsfläche angeordnet. Bei Bestromung der Ringwicklung 3 wird die Ankerscheibe 8 somit von der Bremsfläche weggezogen und somit die Bremse gelüftet. Bei Nichtbestromung der Ringwicklung 3 drücken die Federelemente 10 die Ankerscheibe 8 auf den Belagträger 12, der somit auf die Bremsfläche gedrückt wird. Auf diese Weise ist also eine elektromagnetisch betätigbare Bremse hergestellt.

Beim Bestromen wird die Ankerscheibe 8 beschleunigt und erst durch das Aufschlagen auf den Magnetkörper 4 oder gegebenenfalls auf ein zwischen Ankerscheibe 8 und Magnetkörper 4 angeordnetes Blechteil, wie Dämpfungsblech oder dergleichen, gestoppt. Dabei entsteht ein Aufschlaggeräusch, das im Falle des zwischengeordneten Blechteils etwas gedämpft wird.

Die Ankerscheibe 8 ist vorzugsweise aus einem ferromagnetischen Stahl hergestellt. Ebenso ist der Magnetkörper 4 aus einem ferromagnetischen Stahlguss hergestellt.

Mittels eines an der Ankerscheibe 8 angeordneten, insbesondere fest verbundenen, Stempelteils 7 wird eine zusätzliche verbesserte Geräuschdämpfung erzielt. Dabei weist das Stempelteil 7 einen konischen Abschnitt auf, der in einem entsprechenden innenkonischen Abschnitt einer Hülse 5 aufnehmbar ist. Die Berandung des innenkonischen Abschnitts der Hülse 5 ist dünnwandig ausgeführt, also mit einer geringen Wandstärke.

Die Hülse 5 ist fest verbunden mit dem Magnetkörper 4. Vorzugsweise weist der Magnetkörper hierbei eine axial, also in Wellenachsrichtung, durchgehende Ausnehmung auf, in welcher die Hülse angeordnet ist.

Ein Schraubteil mit Schraubenkopf oder Mutter 1 ist von der vom Belagträger abgewandten Seite des Magnetkörpers 4 her durch die Ausnehmung geführt und schraubverbunden mit der Hülse 5. Somit ist diese Hülse 5 axial fixierbar.

Alternativ ist die Hülse 5 nur in die Ausnehmung des Magnetkörpers 4 eingesteckt und mittels eines an ihrem äußeren Umfang angeordneten O-Rings 17 kraftschlüssig gehalten in der Ausnehmung. Hierzu weist der O-Ring 17 im entspannten Zustand ein Übermaß auf, so dass er beim Einführen in die Ausnehmung elastisch verformt wird. Die Hülse weist an ihrem äußeren Rand einen weiteren O-Ring 6 auf, welcher ebenfalls kraftschlüssig in der Ausnehmung verbunden ist und den innenkonischen Bereich vordämpft.

Somit ist die Hülse 5 über die O-Ringe (6, 17) mit dem Magnetkörper kraftschlüssig verbunden. Außerdem wird bei Aufschlag des Stempelteils 7 auf der Hülse 5, insbesondere also bei zunehmender Berührung des konischen Abschnitts des Stempelteils 7 mit dem innenkonischen Abschnitt der Hülse 5, der innenkonische Bereich der Hülse 5 aufgespreizt und somit verformt. Dabei wird zumindest auch der O-Ring 6, welcher gegen einen Absatz der Hülse 5 angeordnet ist, an seinem Umfang nach außen gequetscht, wodurch eine Vordämpfung erreicht ist.

Außerdem wird die Hülse 5 bei Aufschlag des Stempelteils 7 auf der Hülse 5, insbesondere also bei zunehmender Berührung des konischen Abschnitts des Stempelteils 7 mit dem innenkonischen Abschnitt der Hülse 5, axial verschoben entgegen der von den kraftschlüssig in der Aufnahme des Magnetkörpers 4 gehaltenen O-Ringen (6, 17) erzeugten Federkraft. Auch dies trägt zur Vordämpfung bei
Der Konuswinkel des konischen Abschnitts des Stempelteils 7 ist spitzer, also geringer, als der Öffnungswinkel des innenkonischen Abschnitts der Hülse 5.

Zwar unterscheiden sich die beiden Winkelwerte nur um weniger als 20° oder sogar weniger als 10°, jedoch reicht dieser kleine nicht verschwindende Winkelunterschied für eine wirkungsvolle Dämpfung aus.

Insgesamt ist also der Aufschlag einerseits durch die aus elastischem Material, insbesondere Kunststoff oder Gummi, bestehenden O-Ringe (6, 17) vorgedämpft und andererseits durch die Konuswinkel-Differenz zwischen dem konischen Bereich des Stempelteils 7 und dem innenkonischen Bereich der Hülse 5 gedämpft.

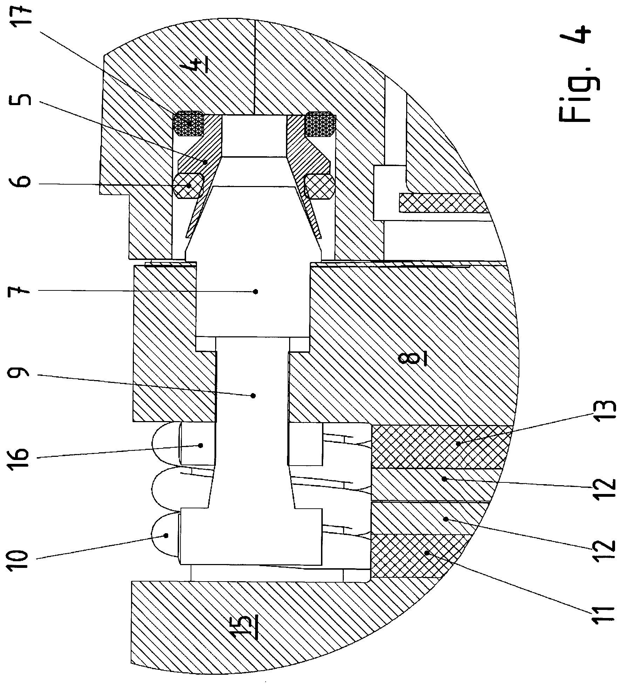

Wie in Figur 4 deutlich gezeigt ist an der Ankerscheibe 8 auch eine mit der Ankerscheibe schraubverbundene Stellschraube 9 mit Kontermutter 16 anbringbar, mit welcher die Stellschraube 9 festlegbar ist an der Ankerscheibe 8.

Das dem Magnetkörper 4 zugewandte axiale Ende begrenzt das Stempelteil 7 axial und ermöglicht mittels der Veränderung der Einschraubtiefe der Stellschraube 9 in der Ankerscheibe 8 das Einstellen des Dämpfungssystems, insbesondere also auch das Einstellen der Federkennlinie des Dämpfungssystems.

Wie in Figur 4 gezeigt, ist die Hülse 5 auch in einer im Magnetkörper vorgesehenen Sacklochbohrung anordenbar. Dabei ist die Sacklochbohrung in axialer Richtung gerichtet und zur Ankerscheibe 8 hin offen. Die Hülse 5 ist wiederum kraftschlüssig gehalten in der Sacklochbohrung. Dieses Einklemmen wird wiederum mittels der O-Ringe (6, 17) erreicht. Der Boden der Sacklochbohrung begrenzt die Hülse 5 axial. Insbesondere liegt die Hülse 5 am Boden der Sacklochbohrung auf.

Die Wandstärke des Hülse 5 im innenkonischen Bereich ist geringer als die Wandstärke des Stempelteils 7 im außenkonischen Bereich.

Am Umfang des Magnetkörpers 4 sind mehrere Dämpfungssysteme, also solcher aus Stempelteil 7, Hülse 5 bestehenden Systeme, vorgesehen, welche in Umfangsrichtung zueinander regelmäßig voneinander beabstandet sind,.

Bei weiteren erfindungsgemäßen Ausführungsbeispielen ist das Stempelteil 7 stets berührend mit der Hülse 5. Dabei ist also der Hub h der Ankerscheibe 8 zwischen dem geöffneten und geschlossenen Zustand der Bremse derart gering, dass Stempelteil 7 und Hülse 5 während des Betriebs nicht den Kontakt verlieren.

Außerdem ist der O-Ring 17 bei diesem erfindungsgemäßen Ausführungsbeispiel am axialen Endbereich der Hülse 5 kraftschlüssig aufgesteckt auf die Hülse 5 angeordnet. Die Hülse 5 weist einen Durchmesserstufe auf, also einen an den axialen Endbereich angrenzenden Bereich, in welchem der Durchmesser den Durchmesser des axialen Endbereichs übersteigt. Gegen diese Durchmesserstufe liegt der O-Ring 17 an. Darüber hinaus ragt er axial von der Hülse 5 hervor, so dass die Hülse 5 den Magnetkörper 4 nicht direkt berührt sondern über den O-Ring 17 am Magnetkörper 4 abgestützt ist, solange die Ankerscheibe 8 nicht eine entsprechend große Kraft einleitet, so dass der O-Ring 17 entsprechend elastisch verformt wird.

Die Federkennlinie des O-Rings 17 wird also der entsprechenden Kennlinie der vom Stempelteil 7 elastisch verformten Hülse 5 überlagert.

Wenn also die Ankerscheibe 8 von der bestromten Ringwicklung angezogen wird in Richtung des Magnetköpers 4 wird zunächst hauptsächlich der O-Ring 17 verformt und die Hülse 5 nur wenig vom Stempelteil 7 aufgedehnt. Erst nach Erreichen der Berührung des Magnetkörpers 4 und der Hülse 5 wird durch die Verformung, insbesondere Aufdehnung, der Hülse 5 durch das Stempelteil 7 die Gegenkraft erzeugt, da der O-Ring 17 nicht weiter verformt werden kann. Somit nimmt dann die Steigung der Federkennlinie F(X) im Vergleich zur Steigung der Federkennlinie des O-Rings 17 stark zu. Die Federkennlinie ist dabei der Zusammenhang zwischen der Auslenkung X der Ankerscheibe 8 und der vom Dämpfungssystem, also Stempelteil 7, Hülse 5 und O-Ring 17, erzeugten Rückstellkraft.

Diese vom Dämpfungssystem erzeugte Rückstellkraft wirkt somit in dieselbe Richtung wie die von den Federelementen zur Rückstellung der Ankerscheibe 8 erzeugte Federkraft.

Zur Aufnahme der Hülse 5 ist dabei ein Sackloch im Magnetkörper 4 vorgesehen. Die genannte Abstützung der Hülse 5 nach Verformung des O-Rings 17 erfolgt somit am Boden des Sacklochs. Der Durchmesser des Sacklochs ist größer als die Hülse 5, so dass genügend Raumbereich für den O-Ring 17 vorhanden ist.

Unter O-Ring 17 werden auch andere elastische Elemente verstanden, welche zur Dämpfung der Ankerscheibe 8 zwischen Hülse 5 und Magnetkörper 4 verwendbar sind. Beispielsweise ist statt der Hülse 5 und des O-Rings 17 auch eine mit Kunststoff umspritzte Hülse 5 vorsehbar, wobei der Raumbereich des Kunststoffs von der Form eines O-Rings abweicht. Wichtig ist bei dem elastischen Element nur, dass es zwischen Hülse 5 und Magnetkörper zwischengeordnet ist und elastisch verformbar ist bei Vorhandensein von von der Ankerscheibe 8 her eingeleiteten Kräften.

Der weitere O-Ring 6 hat im Wesentlichen nur die Zentrierung der Hülse 5 in dem Sackloch zur Aufgabe.

Bei weiteren erfindungsgemäßen Ausführungsbeispielen weist die Hülse 5 Schlitze auf, so dass die elastische Verformbarkeit verbessert ist und somit die Federkennlinie weniger steil verläuft. Auf diese Weise ist das Dämpfungsverhalten anpassbar. Die Schlitze sind vorzugsweise Radialschlitze, verlaufen also im Wesentlichen radial und axial, wobei sie hingegen in Umfangsrichtung der Hülse 5 nur eine geringe Ausdehnung aufweisen.

Am Umfang der Hülse 5 sind wiederum mehrere solcher Dämpfungssysteme vorgesehen, welche in Umfangsrichtung zueinander regelmäßig voneinander beabstandet sind,.

Bei weiteren erfindungsgemäßen Ausführungsbeispielen sind die Stempelteile 7 mit der Ankerscheibe 8 einstückig ausgeformt.

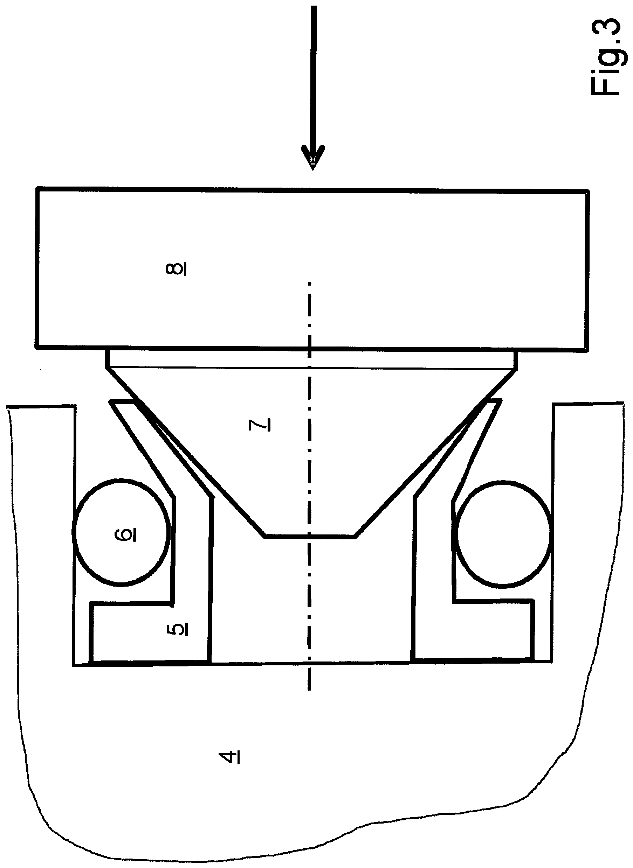

Bei weiteren erfindungsgemäßen Ausführungsbeispielen ist an der Ankerscheibe 8 statt des konischen Stempelteils 7 ein innenkonisches Hülsenteil vorgesehen und am Magnetkörper 4, insbesondere in einer Ausnehmung des Magnetkörpers 4, ein außenkonisches Stempelteil. Wie bei den Ausführungsbeispielen nach den Figuren 1 bis 4 weisen das innenkonische und das außenkonische Teil wiederum einen unterschiedlichen Konuswinkel auf, so dass das Hülsenteil gedehnt wird. Alternativ ist statt der Dünnwandigen Ausführung des Hülsenteils das Stempelteil dünnwandig ausführbar.

**Der Konuswinkel ist dabei größer als der Selbsthemmung bewirkende Winkel, also mehr als 10° bei Ausführung aus Stahl.**

**Bei weiteren erfindungsgemäßen Ausführungsbeispielen haben Außenkonus und Innenkonus denselben Konuswinkel.**

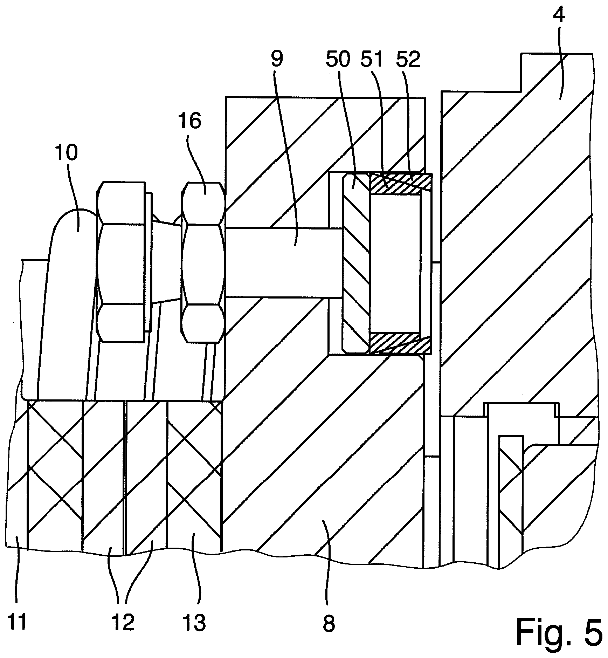

**Wie in** **Figur 5** **gezeigt, ist in der Ankerscheibe 8 eine Doppelhülse angeordnet, die aus einem außenkonischen Ringteil 51 besteht, die in ein innenkonisches Ringteil 52 zumindest teilweise hineinragt.**

**Der Konuswinkel der Außenkonus ist hierbei zwischen 7° und 50°, insbesondere zwischen 10° und 30°, gewählt, so dass bei Ausführung der Ringteile (51, 52) aus Stahl die Selbsthemmung vermieden ist. Der Innenkonus weist dabei den gleichen Konuswinkel wie der Außenkonus auf oder unterscheidet sich von diesem um weniger als 30°, insbesondere um weniger als 10°.**

**Die Konusfläche des Außenkonus berührt die Konusfläche des Innenkonus vorzugsweise flächig, also nicht linienhaft.**

**Die so gebildete Doppelhülse ragt aus der Aufnahmebohrung der Ankerscheibe 8 zum Magnetkörper 4 hin heraus. Der Luftspalt zwischen Ankerscheibe 8 und Magnetkörper 4 weist in jedem Betriebszustand einen kleineren Wert auf als die axiale Ausdehnung der Doppelhülse oder des außenkonischen Ringteils 51 oder des innenkonischen Ringteils 52.**

**Zur Einstellung des Axialspiels für die Doppelhülse ist in der Aufnahmebohrung der Ankerscheibe eine Druckscheibe eingelegt, auf die das axiale Ende der Stellschraube 9 drückt. Die Stellschraube 9 ist an der Ankerscheibe 8 festlegebar mittels der Kontermutter 16. Die Druckscheibe 50 ist axial zwischen der Stellschraube 9 und der Doppelhülse angeordnet. Somit begrenzt die Stellschraube 9 die Druckscheibe 50 axial und die Druckscheibe 50 somit die Doppelhülse.**

**Wenn nun bei Bestromung der Spule 3 die Ankerscheibe 8 zum Magnetkörper 4 hin angezogen wird, kommt zunächst das innenkonische ausgeführte Ringteil 52 in Berührung mit dem Magnetkörper 4. Durch die Verformung der Doppelhülse wird eine Federkraft erzeugt, die auf die Ankerscheibe 8 abbremsend wirkt.**

**Bei weiteren erfindungsgemäßen Ausführungsbeispielen ist die Doppelhülse nicht in einer Aufnahmebohrung der Ankerscheibe 8 sondern in einer Aufnahmebohrung des Magnetkörpers 4 aufgenommen. In diesem Fall muss die Ankerscheibe 8 keine Aufnahmebohrung aufweisen sondern darf auch zum Magnetkörper 4 hin plan ausgeführt sein. Da die Doppelhülse aber axial länger ausgeführt ist als der Luftspalt ist es sogar möglich, zwei konzentrische sich gegenüberstehende Aufnahmebohrungen vorzusehen, welche die Doppelhülse jeweils teilweise aufnehmen. Dabei ist dann die erste Aufnahmebohrung in der Ankerscheibe 8 und die andere im Magnetkörper 4 angeordnet.**

**Bei weiteren erfindungsgemäßen Ausführungsbeispielen weist das außenkonische Ringteil 51 und/oder das innenkonische Ringteil 52 zusätzlich einen Axialschlitz, insbesondere also Längsschlitz in Ringachsenrichtung, auf zur Vergrößerung der elastischen Verformbarkeit der Ringteile.**

### Bezugszeichenliste

1 Mutter
2 Spulenträger
3 Spule, insbesondere Ringwicklung
4 Magnetkörper, Stahlgussteil, ferromagnetisch
5 Hülse
6 O-Ring
7 Stempelteil
8 Ankerscheibe
9 Stellschraube
10 Federelement
11 Bremsbelag
12 Belagträger
13 Bremsbelag
14 Mitnehmerverzahnung
15 Bremsfläche aufweisendes Teil, insbesondere Gehäuseteil oder Lagerflansch zur Aufnahme des Lagers einer Welle, insbesondere Rotorwelle
16 Kontermutter
50 Druckscheibe
51 außenkonischen Ringteil
52 innenkonischen Ringteil
h Hub der Ankerscheibe
X Auslenkung der Ankerscheibe von der bei unbestromter Spule bewirkten Ruhelage aus F Federkraft, Rückstellkraft

## Patentansprüche

1. Bremsanordnung mit einem eine Spulenwicklung (3), insbesondere Ringwicklung, aufnehmenden Spulenkern (4), insbesondere Magnetkörper, und mit einer mit dem Spulenkern drehfest aber verschiebbar, insbesondere axial verschiebbar, insbesondere in Achsrichtung einer abzubremsenden Welle, angeordneten Ankerscheibe (8), wobei mit der Ankerscheibe zumindest ein Stempelteil (7) verbunden ist, **dadurch gekennzeichnet dass** das jeweilige Stempelteil (7) mit einem das jeweilige Stempelteil zumindest teilweise aufnehmendes Hülsenteil (5) zusammenwirkt, wobei das Hülsenteil mit dem Spulenkern verbunden ist, insbesondere kraftschlüssig verbunden ist,
insbesondere wobei das Hülsenteil in einer Ausnehmung des Spulenkerns gehalten ist mittels zumindest eines elastischen Elements (17).

2. **Bremsanordnung nach Anspruch 1,**
**dadurch gekennzeichnet, dass**
**in einer Ausnehmung der Ankerscheibe (8) und/oder in einer Ausnehmung des Spulenkerns, also Magnetkörpers, eine Doppelhülse angeordnet und gehalten ist, deren axiale Ausdehnung größer ist als die axiale Ausdehnung des Luftspaltes zwischen Ankerscheibe und** Magnetkörper (4), **wobei die Doppelhülse aus einem einen Innenkonus aufweisenden Ringteil, also dem Hülsenteil, und einem einen Außenkonus aufweisenden Ringteil, also dem Stempelteil, zusammengesetzt ist,**
**wobei das Stempelteil mit einem Teilbereich seines Außenkonus an einem Teilbereich des Innenkonus des Hülsenteils anliegt,**
**wobei das Hülsenteil in axialer Richtung, insbesondere Verschiebungsrichtung, weniger vom Magnetkörper beabstandet ist als das Stempelteil,**
- **wobei die Doppelhülse axial begrenzt ist durch den Boden der Ausnehmung in der Ankerscheibe und/oder im Magnetkörper**
- **oder wobei die Doppelhülse axial begrenzt ist durch eine mittels einer Stellschraube axial verstellbare Druckscheibe, insbesondere wobei die Stellschraube schraubverbunden ist mit der Ankerscheibe oder dem Magnetkörper und/oder wobei die Stellschraube mittels einer Kontermutter an der Ankerscheibe und/oder am Magnetkörper festlegbar ist.**

3. Bremsanordnung nach mindestens einem der vorangegangenen Ansprüche, **dadurch gekennzeichnet, dass**
der Spulenkern aus einem ferromagnetischen Material, insbesondere Stahlguss, insbesondere GGG-Grauguss, gefertigt ist
und/oder dass
Ankerscheibe, Hülsenteil und/oder Stempelteil aus eine Stahl gefertigt sind, insbesondere aus einem ferromagnetischen Stahl.

4. Bremsanordnung nach mindestens einem der vorangegangenen Ansprüche, **dadurch gekennzeichnet, dass**
- das Stempelteil einen außenkonischen Abschnitt aufweist und das Hülsenteil einen innenkonischen Abschnitt, wobei die Konuswinkel des außenkonischen und innenkonischen Abschnitts sich um einen nicht verschwindenden Winkelbetrag unterscheiden, insbesondere wobei der Winkelbetrag zwischen 2° und 20° beträgt,
- oder dass das Stempelteil einen innenkonischen Abschnitt aufweist und das Hülsenteil einen außenkonischen Abschnitt, wobei die Konuswinkel des außenkonischen und innenkonischen Abschnitts sich um einen nicht verschwindenden Winkelbetrag unterscheiden, insbesondere wobei der Winkelbetrag zwischen 2° und 20° beträgt.

5. Bremsanordnung nach mindestens einem der vorangegangenen Ansprüche, **dadurch gekennzeichnet, dass**
die Stempelteile an der Ankerscheibe einstückig ausgeformt ist
oder dass jedes Stempelteil mittels einer Stellschraube, insbesondere mit Kontermutter, schraubverbunden ist mit der Ankerscheibe.

6. Bremsanordnung nach mindestens einem der vorangegangenen Ansprüche,
**dadurch gekennzeichnet, dass**
das Hülsenteil kraftschlüssig mit dem Spulenkern verbunden ist.

7. Bremsanordnung nach mindestens einem der vorangegangenen Ansprüche,
**dadurch gekennzeichnet, dass**
am Hülsenteil ein elastisches Element (17), wie O-Ring oder dergleichen, angeordnet ist, das zwischen dem Hülsenteil und dem Spulenkern, insbesondere einer Ausnehmung des Spulenkerns, angeordnet ist,
insbesondere wobei das elastische Element angestellt ist gegen einen Absatz, insbesondere Durchmesserstufe, des Hülsenteils.

8. Bremsanordnung nach mindestens einem der vorangegangenen Ansprüche,
**dadurch gekennzeichnet, dass**
die Stempelteile in Umfangsrichtung voneinander regelmäßig beabstandet sind
und/oder dass
die Hülsenteile in Umfangsrichtung voneinander regelmäßig beabstandet sind.

9. Bremsanordnung nach mindestens einem der vorangegangenen Ansprüche,
**dadurch gekennzeichnet, dass**
das jeweilige Hülsenteil Schlitze aufweist, insbesondere zur Hülsenachse radial und axial sich erstreckende Schlitze, insbesondere wobei die Schlitze sich zur Hülsenachse radial und axial weiter erstrecken als in Umfangsrichtung.

10. Bremsanordnung nach mindestens einem der vorangegangenen Ansprüche,
**dadurch gekennzeichnet, dass**
am Hülsenteil ein weiteres elastisches Element (6), wie O-Ring oder dergleichen, angeordnet ist, welcher wiederum zwischen Spulenkern und Hülsenteil angeordnet ist und elastisch verformt ist, insbesondere so dass das Hülsenteil zentriert ist in der Aufnahme, insbesondere Sackloch, des Spulenkerns.

11. Bremsanordnung nach mindestens einem der vorangegangenen Ansprüche,
**dadurch gekennzeichnet, dass**
der Durchmesser des innenkonischen Abschnitts größer ist als die Wandstärke im außenkonischen Abschnitt.

12. Bremsanordnung nach mindestens einem der vorangegangenen Ansprüche,
**dadurch gekennzeichnet, dass**
der Boden der Ausnehmung, insbesondere der Sacklochbohrung, das Hülsenteil in Hubrichtung der Ankerscheibe begrenzt.

13. Bremsanordnung nach mindestens einem der vorangegangenen Ansprüche,
**dadurch gekennzeichnet, dass**
das elastische Element (17) axial über den axialen Endabschnitt des Hülsenteils hervorsteht,
insbesondere wobei die Verformung des elastischen Elements (17) begrenzt ist durch die Berührung zwischen Hülsenteil und Spulenkern, insbesondere Boden der Ausnehmung, insbesondere des Sacklochs, des Spulenkerns.

14. Bremsanordnung nach mindestens einem der vorangegangenen Ansprüche,
**dadurch gekennzeichnet, dass**
der Konuswinkelbetrag des Außenkonus gleich dem Konuswinkelbetrag des Innenkonus
und/oder dass
die beiden Konuswinkelbeträge sich um weniger als 1° unterscheiden.

15. Elektromotor mit einer Bremsanordnung nach mindestens einem der vorangegangenen Ansprüche,
insbesondere wobei die Bremsanordnung auf der von der vom Motor angetriebenen Last abgewandten axialen Seite der Rotorwelle des Motors angeordnet ist.

## Claims

1. Brake arrangement having a coil core (4) receiving a coil winding (3), in particular ring winding, in particular magnetic body, and having an armature disc (8) arranged fixed against rotation but displaceable, in particular axially displaceable, in particular in the axial direction of a shaft to be braked,
wherein at least one plunger part (7) is connected to the armature disc,
**characterised in that** the respective plunger part (7) interacts with a sleeve part (5) at least partially receiving the respective plunger part,
wherein the sleeve part is connected to the coil core, in particular by a force fit,
in particular wherein the sleeve part is held in a recess of the coil core by means of at least one elastic element (17).

2. Brake arrangement according to claim 1,
**characterised in that**
in a recess of the armature disc (8) and/or in a recess of the coil core, i.e. magnetic body, a double sleeve is arranged and held, the axial extent of which is greater than the axial extent of the air gap between armature disc and magnetic body (4),
wherein the double sleeve is composed of a ring part having an inner cone, i.e. the sleeve part, and a ring part having an outer cone, i.e. the plunger part,
wherein the plunger part bears, with a partial region of its outer cone, against a partial region of the inner cone of the sleeve part,
wherein the sleeve part is spaced in the axial direction, in particular displacement direction, less from the magnetic body than the plunger part,
- wherein the double sleeve is axially delimited by the bottom of the recess in the armature disc and/or in the magnetic body
- or wherein the double sleeve is axially delimited by a pressure disc axially adjustable by means of an adjusting screw, in particular wherein the adjusting screw is screw-connected to the armature disc or the magnetic body and/or wherein the adjusting screw is securable by means of a locknut on the armature disc and/or on the magnetic body.

3. Brake arrangement according to at least one of the preceding claims,
**characterised in that**
the coil core is produced from a ferromagnetic material, in particular cast steel, in particular ductile cast iron
and/or **in that**
armature disc, sleeve part and/or plunger part are produced from a steel, in particular from a ferromagnetic steel.

4. Brake arrangement according to at least one of the preceding claims,
**characterised in that**
- the plunger part has an outer-conical portion and the sleeve part has an inner-conical portion, wherein the cone angles of the outer-conical and inner-conical portion differ by a non-vanishing angle amount, in particular wherein the angle amount is between 2° and 20°,
- or **in that** the plunger part has an inner-conical portion and the sleeve part has an outer-conical portion, wherein the cone angles of the outer-conical and inner-conical portion differ by a non-vanishing angle amount, in particular wherein the angle amount is between 2° and 20°.

5. Brake arrangement according to at least one of the preceding claims,
**characterised in that**
the plunger parts are formed in one piece on the armature disc,
or **in that** each plunger part is screw-connected to the armature disc, by means of an adjusting screw, in particular with locknut.

6. Brake arrangement according to at least one of the preceding claims,
**characterised in that**
the sleeve part is connected to the coil core by a force fit.

7. Brake arrangement according to at least one of the preceding claims,
**characterised in that**
on the sleeve part there is arranged an elastic element (17), such as an O-ring or the like, which is arranged between the sleeve part and the coil core, in particular a recess of the coil core,
in particular wherein the elastic element is placed against a shoulder, in particular diameter step, of the sleeve part.

8. Brake arrangement according to at least one of the preceding claims,
**characterised in that**
the plunger parts are evenly spaced from one another in the circumferential direction
and/or **in that**
the sleeve parts are evenly spaced from one another in the circumferential direction.

9. Brake arrangement according to at least one of the preceding claims,
**characterised in that**
the respective sleeve part has slots, in particular slots extending radially and axially with respect to the sleeve axis, in particular wherein the slots extend further radially and axially with respect to the sleeve axis than in the circumferential direction.

10. Brake arrangement according to at least one of the preceding claims,
**characterised in that**
on the sleeve part there is arranged a further elastic element (6), such as an O-ring of the like, which in turn is arranged between coil core and sleeve part and is elastically deformed, in particular so that the sleeve part is centred in the receptacle, in particular blind hole, of the coil core.

11. Brake arrangement according to at least one of the preceding claims,
**characterised in that**
the diameter of the inner-conical portion is greater than the wall thickness in the outer-conical portion.

12. Brake arrangement according to at least one of the preceding claims,
**characterised in that**
the bottom of the recess, in particular of the blind hole bore, delimits the sleeve part in the stroke direction of the armature disc.

13. Brake arrangement according to at least one of the preceding claims,
**characterised in that**
the elastic element (17) protrudes axially beyond the axial end portion of the sleeve part,
in particular wherein the deformation of the elastic element (17) is delimited by the contact between the sleeve part and the coil core, in particular bottom of the recess, in particular of the blind hole, of the coil core.

14. Brake arrangement according to at least one of the preceding claims,
**characterised in that**
the cone angle amount of the outer cone is equal to the cone angle amount of the inner cone
and/or **in that**
the two cone angle amounts differ by less than 1°.

15. Electric motor having a brake arrangement according to at least one of the preceding claims,
in particular wherein the brake arrangement is arranged on the side of the rotor shaft of the motor axially remote from the load driven by the motor.

## Revendications

1. Dispositif de freinage, avec un noyau de bobine (4) qui reçoit un enroulement de bobine (3), en particulier un enroulement annulaire, et qui est en particulier un corps magnétique, et avec un disque d'induit (8) disposé solidaire en rotation du noyau de bobine mais mobile en translation, en particulier mobile en translation axiale, en particulier dans la direction axiale d'un arbre à freiner,
sachant qu'au moins une partie piston (7) est reliée au disque d'induit,
**caractérisé en ce que** la partie piston respective (7) coopère avec une partie douille (5) recevant au moins partiellement la partie piston respective,
sachant que la partie douille est reliée au noyau de bobine, en particulier lui est reliée à force,
sachant en particulier que la partie douille est maintenue dans un évidement du noyau de bobine au moyen d'au moins un élément élastique (17).

2. Dispositif de freinage selon la revendication 1, **caractérisé en ce qu'**une double douille, dont l'étendue axiale est supérieure à l'étendue axiale de l'entrefer entre le disque d'induit et le corps magnétique (4), est disposée et maintenue dans un évidement du disque d'induit (8) et/ou dans un évidement du noyau de bobine,
sachant que la double douille est composée d'une partie annulaire présentant un cône intérieur, donc de la partie douille, et d'une partie annulaire présentant un cône extérieur, donc de la partie piston,
sachant que la partie piston s'applique par une région partielle de son cône extérieur contre une région partielle du cône intérieur de la partie douille,
sachant que la partie douille est moins éloignée du corps magnétique que de la partie piston en direction axiale, en particulier dans la direction de translation,
- sachant que la partie douille est axialement délimitée par le fond de l'évidement dans le disque d'induit et/ou dans le corps magnétique,
- ou sachant que la partie douille est axialement délimitée par un disque de pression axialement réglable au moyen d'une vis de réglage, sachant en particulier que la vis de réglage est reliée par vissage au disque d'induit ou au corps magnétique et/ou sachant que la vis de réglage peut être immobilisée contre le disque d'induit et/ou contre le corps magnétique au moyen d'un contre-écrou.

3. Dispositif de freinage selon au moins une des revendications précédentes, **caractérisé en ce que** le noyau de bobine est fabriqué en un matériau ferromagnétique, en particulier en fonte d'acier, en particulier en fonte grise FGS,
et/ou **en ce que** le disque d'induit, la partie douille et/ou la partie piston sont fabriqués en un acier, en particulier en un acier ferromagnétique.

4. Dispositif de freinage selon au moins une des revendications précédentes, **caractérisé**
- **en ce que** la partie piston présente une portion à cône extérieur et la partie douille une portion à cône intérieur, sachant que l'angle de cône de la portion à cône extérieur et l'angle de cône de la portion à cône intérieur diffèrent d'une valeur angulaire non infiniment petite, sachant en particulier que la valeur angulaire est comprise entre 2° et 20°,
- ou en ce que la partie piston présente une portion à cône intérieur et la partie douille une portion à cône extérieur, sachant que l'angle de cône de la portion à cône extérieur et l'angle de cône de la portion à cône intérieur diffèrent d'une valeur angulaire non infiniment petite, sachant en particulier que la valeur angulaire est comprise entre 2° et 20°.

5. Dispositif de freinage selon au moins une des revendications précédentes, **caractérisé en ce que** les parties piston sont formées d'un seul tenant sur le disque d'induit,
ou **en ce que** chaque partie piston est reliée par vissage au disque d'induit au moyen d'une vis de réglage, en particulier avec contre-écrou.

6. Dispositif de freinage selon au moins une des revendications précédentes, **caractérisé en ce que** la partie douille est reliée à force au noyau de bobine.

7. Dispositif de freinage selon au moins une des revendications précédentes, **caractérisé en ce qu'**un élément élastique (17), comme un joint torique ou analogues, est disposé sur la partie douille, élément qui est disposé entre la partie douille et le noyau de bobine, en particulier un évidement du noyau de bobine,
sachant en particulier que l'élément élastique est appliqué contre un décrochement de la partie douille, en particulier un gradin de diamètre.

8. Dispositif de freinage selon au moins une des revendications précédentes, **caractérisé en ce que** les parties piston sont régulièrement espacées les unes des autres en direction périphérique,
et/ou **en ce que** les parties douille sont régulièrement espacées les unes des autres en direction périphérique.

9. Dispositif de freinage selon au moins une des revendications précédentes, **caractérisé en ce que** la partie douille respective présente des fentes, en particulier des fentes s'étendant radialement et axialement par rapport à l'axe de la douille, sachant en particulier que les fentes s'étendent radialement et axialement par rapport à l'axe de la douille plus loin qu'en direction périphérique.

10. Dispositif de freinage selon au moins une des revendications précédentes, **caractérisé en ce qu'**un autre élément élastique (6), comme un joint torique ou analogues, est disposé sur la partie douille, élément qui est à nouveau disposé entre la partie douille et le noyau de bobine et qui est élastiquement déformé, de sorte en particulier que la partie douille est centrée dans l'évidement, en particulier un trou borgne, du noyau de bobine.

11. Dispositif de freinage selon au moins une des revendications précédentes, **caractérisé en ce que** le diamètre de la portion à cône intérieur est supérieur à l'épaisseur de paroi de la portion à cône extérieur.

12. Dispositif de freinage selon au moins une des revendications précédentes, **caractérisé en ce que** le fond de l'évidement, en particulier du trou borgne, délimite la partie douille dans la direction de la course du disque d'induit.

13. Dispositif de freinage selon au moins une des revendications précédentes, **caractérisé en ce que** l'élément élastique (17) dépasse axialement de la portion terminale axiale de la partie douille,
sachant en particulier que la déformation de l'élément élastique (17) est limitée par le contact entre la partie douille et le noyau de bobine, en particulier le fond de l'évidement, en particulier du trou borgne, du noyau de bobine.

14. Dispositif de freinage selon au moins une des revendications précédentes, **caractérisé en ce que** la valeur de l'angle de cône du cône extérieur est égale à la valeur de l'angle de cône du cône intérieur,
et/ou **en ce que** les deux valeurs d'angle de cône diffèrent de moins de 1°.

15. Moteur électrique avec un dispositif de freinage selon au moins une des revendications précédentes,
sachant en particulier que le dispositif de freinage est disposé sur le côté axial de l'arbre de rotor du moteur qui est éloigné de la charge entraînée par le moteur.
